**Europäisches Patentamt**

**European Patent Office**

**Office européen des brevets**

(19)

(11) Numéro de publication : **0 575 228 B1**

(12)

# FASCICULE DE BREVET EUROPEEN

(45) Date de publication du fascicule du brevet :
30.08.95 Bulletin 95/35

(51) Int. Cl.⁶ : **G06F 9/44**

(21) Numéro de dépôt : **93401498.6**

(22) Date de dépôt : **11.06.93**

(54) Procédé pour charger un programme dans une mémoire de programmes associée à un processeur.

(30) Priorité : **19.06.92 FR 9207509**

(43) Date de publication de la demande :
**22.12.93 Bulletin 93/51**

(45) Mention de la délivrance du brevet :
**30.08.95 Bulletin 95/35**

(84) Etats contractants désignés :
**DE FR GB IT**

(56) Documents cités :
**ELECTRONICS & WIRELESS WORLD vol. 94,
no. 1626, Avril 1988, SURREY GB pages 344 -
345 J. COOKE 'Z80 Bootstrapping and Communication Interface'
DATABASE WPIL, Week 9004, Derwent Publications Ltd., London, GB; AN 90-029493**

(73) Titulaire : **SGS-THOMSON
MICROELECTRONICS S.A.
7, Avenue Galliéni
F-94250 Gentilly (FR)**

(72) Inventeur : **Menut, Patrick
7 Allée Jean-Philippe Rameau
F-38130 Echirolles (FR)**
Inventeur : **Odinot, Charles
1 Chemin saint Ferjus
F-38700 La Tronche (FR)**

(74) Mandataire : **Schmit, Christian Norbert Marie
et al
Cabinet Ballot-Schmit
7, rue Le Sueur
F-75116 Paris (FR)**

EP 0 575 228 B1

## Description

La présente invention concerne un procédé pour charger un programme dans une mémoire de programmes associée à un processeur. L'invention s'applique à un processeur, tel qu'un processeur de traitement de signal (DSP), pour lequel le programme à charger et à exécuter peut être soit lu dans une mémoire morte (ROM) extérieure au processeur, soit fourni au processeur par un calculateur hôte.

Le choix entre ces deux modes de chargement appartient habituellement à l'utilisateur du processeur. Celui-ci peut enregistrer son programme à exécuter dans une mémoire morte, par exemple du type EPROM, ou il peut préférer, notamment dans les phases de conception et développement de son programme, que celui-ci soit chargé depuis un calculateur hôte tel qu'un micro-ordinateur.

Pour sélectionner le mode de chargement, l'utilisateur doit habituellement installer un câblage externe entre des broches particulières du circuit incluant le processeur. Le programme d'amorçage et de chargement (bootstrap) du processeur commence alors par tester les états logiques de ces broches particulières pour déterminer si le programme à exécuter doit être chargé depuis la mémoire morte extérieure ou depuis le calculateur hôte. Ce procédé est notamment appliqué par le processeur de traitement de signal commercialisé par la société MOTOROLA sous l'appellation DSP56116.

Pour l'utilisateur, le fait de devoir installer des composants tels que des cavaliers entre des broches du circuit n'est ni commode ni fiable. Pour le concepteur du circuit, ceci introduit l'inconvénient de devoir prévoir des broches dédiées à la fonction de sélection du mode de chargement.

Le but de la présente invention est de remédier à ces inconvénients en proposant un procédé ne nécessitant aucun câblage externe pour sélectionner le mode de chargement du programme à exécuter par le processeur.

Suivant l'invention, ce but est atteint par un procédé pour charger un programme dans une mémoire de programmes associée à un processeur, le processeur comprenant un bus de données local auquel peut être reliée une mémoire morte extérieure contenant un programme, et une boîte aux lettres pour échanger des données avec un calculateur hôte par l'intermédiaire d'un bus de données externe, dans lequel on réinitialise le processeur en activant un signal de réinitialisation et, après avoir désactivé le signal de réinitialisation, on exécute une série d'instructions pour écrire le programme à charger dans la mémoire de programme, caractérisé en ce que ladite série d'instructions comprend un test initial de l'état de la boîte aux lettres pour déterminer si des données ont été écrites dans un registre d'entrée de la boîte aux lettres depuis le calculateur hôte pendant l'activation du signal de réinitialisation, et en ce que, selon le résultat de ce test initial, on lit le programme à charger soit dans le registre d'entrée de la boîte aux lettres soit dans la mémoire morte extérieure par l'intermédiaire du bus de données local.

La sélection de la source du programme à charger s'effectue ainsi par un test logique qui ne nécessite aucun câblage externe du circuit.

De préférence, la série d'instructions de chargement est telle que, si le calculateur hôte a écrit dans le registre d'entrée de la boîte aux lettres pendant la phase de réinitialisation, le programme sera chargé depuis le calculateur hôte par l'intermédiaire du bus externe et de la boîte aux lettres 25, tandis que, dans le cas contraire, le programme sera chargé depuis la mémoire morte extérieure.

D'autres particularités et avantages de l'invention apparaîtront dans la description ci-après d'un exemple de réalisation préféré, lue conjointement aux dessins annexés, dans lesquels :
- la figure 1 est un schéma illustrant l'environnement d'un processeur mettant en oeuvre le procédé selon l'invention ; et
- la figure 2 est un organigramme représentant les instructions d'amorçage et de chargement du processeur.

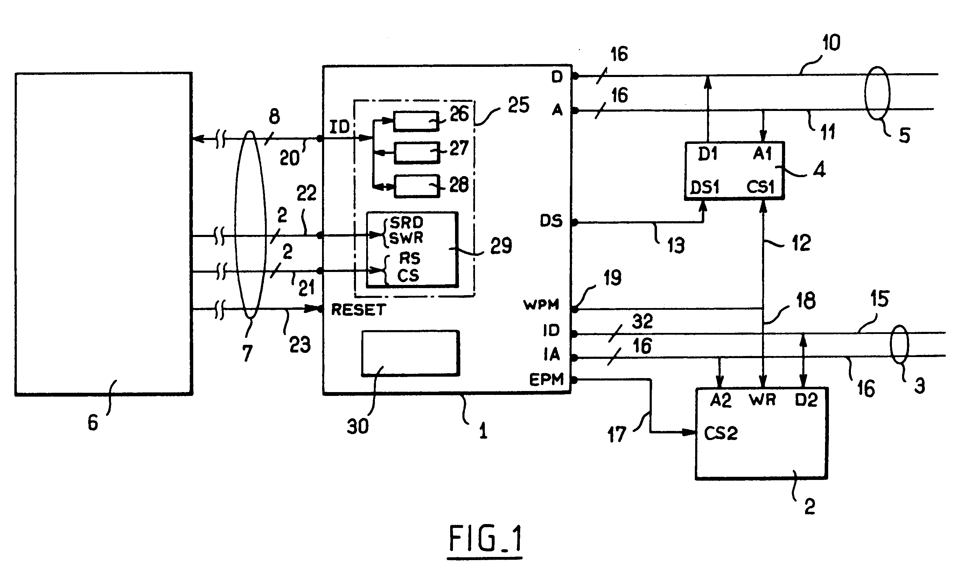

La figure 1 montre un processeur de traitement de signal (DSP) 1 mettant en oeuvre l'invention. Le processeur 1 peut par exemple être du type ST18942 commercialisé par la société SGS-THOMSON MICROELECTRONICS. Le processeur 1 est relié à une mémoire de programmes 2 du type à accès direct (RAM) par l'intermédiaire d'un bus d'instructions 3, à une mémoire morte extérieure 4 du type programmable (EPROM) par l'intermédiaire d'un bus local 5, et à un calculateur hôte 6 par l'intermédiaire d'un bus système 7. Bien entendu, d'autres dispositifs périphériques (mémoires, interfaces, ...) peuvent être raccordés sur le bus d'instructions 3 ou sur le bus local 5 du processeur 1, selon le mode de fonctionnement du processeur 1.

Le bus local 5 comprend un bus de données à 16 bits 10 et un bus d'adresses à 16 bits 11 reliés à la mémoire morte extérieure 4. De façon classique, la mémoire 4 est en outre reliée au processeur 1 par une ligne de sélection 12 et une ligne de synchronisation 13. Pour lire des données à 16 bits dans la mémoire 4 par le bus de données local 10, le processeur 1 délivre un signal CS1 de niveau logique 0 sur la ligne de sélection 12, des impulsions de synchronisation DS1 sur la ligne de synchronisation 13 et une adresse à 16 bits A1 sur le bus d'adresses local 11.

2

Le bus d'instructions 3 comprend un bus de données à 32 bits 15 et un bus d'adresses à 16 bits 16 reliés à la mémoire de programmes 2. La mémoire 2 est en outre reliée au processeur 1 par une ligne de sélection 17 et une ligne de commande 18. Pour écrire des données à 32 bits dans la mémoire de programmes 2 par le bus de données 15, le processeur 1 délivre un signal CS2 de niveau logique 0 sur la ligne de sélection 17, un signal WR de niveau logique 0 sur la ligne de commande 18 et une adresse à 16 bits A2 sur le bus d'adresses 16. Pour lire des données à 32 bits dans la mémoire de programmes 2 par le bus de données 15, le processeur délivre un signal CS2 de niveau logique 0 sur la ligne de sélection 17, un signal WR de niveau logique 1 sur la ligne de commande 18 et une adresse à 16 bits A2 sur le bus d'adresses 16.

Dans l'exemple représenté, la ligne de sélection 12 de la mémoire morte extérieure 4 et la ligne de commande 18 de la mémoire de programmes 2 sont reliées à une même borne 19 du processeur 1 délivrant un signal binaire WPM = CS1 = WR. Ceci est justifié par le fait que la mémoire morte extérieure 4 contient un programme destiné à être chargé dans la mémoire de programmes 2 : lorsque la mémoire morte 4 est sélectionnée (CS1 = 0) la mémoire de programmes 2 ne peut fonctionner qu'en mode d'écriture (WR = 0).

Le calculateur hôte 6 peut par exemple être un processeur du type 80386 commercialisé par la société INTEL. Le bus système 7 comprend un bus de données externe à 8 bits 20, un bus d'adresses à 2 bits 21, un bus de commande à 2 bits 22 et une ligne de commande de réinitialisation 23.

Pour l'échange de données avec le calculateur hôte 6, le processeur 1 comprend une boîte aux lettres 25 comportant un registre d'entrée 26, un registre de sortie 27, un registre d'état 28 et un circuit de commande 29. Le registre d'entrée 26 et le registre de sortie 27 sont deux registres de type premier entré - premier sorti (FIFO) pouvant contenir chacun 16 mots de 8 bits. L'accès de ces deux registres 26, 27 est partagé entre le processeur 1 et le calculateur hôte 6 par l'intermédiaire du bus de données externe 20. Le registre d'état 28 est un registre à 6 bits RINE, RINF, ROUE, ROUF, RISH, ROSH représentant les états indiqués au tableau I

## TABLEAU I

| BIT | VALEUR | SIGNIFICATION |
|---|---|---|
| RINE | 1 | Registre d'entrée 26 vide |
| RINE | 0 | Registre d'entrée 26 non vide |
| RINF | 1 | Registre d'entrée 26 plein |
| RINF | 0 | Registre d'entrée 26 non plein |
| ROUE | 1 | Registre de sortie 27 vide |
| ROUE | 0 | Registre de sortie 27 non vide |
| ROUF | 1 | Registre de sortie 27 plein |
| ROUF | 0 | Registre de sortie 27 non plein |
| RISH | 1 | Accès du processeur 1 au registre d'entrée 26 |
| RISH | 0 | Accès du calculateur hôte 6 au registre d'entrée 26 |
| ROSH | 1 | Accès du processeur 1 au registre de sortie 27 |
| ROSH | 0 | Accès du calculateur hôte 6 au registre de sortie 27 |

Le registre d'état 28 est relié à six des huit conducteurs du bus de données externe 20 pour que le calculateur hôte 6 puisse lire ou écrire des informations dans ce registre 28.

Le circuit de commande 29 de la boîte aux lettres 25 gère les accès aux registres d'entrée et de sortie 26,27 selon un protocole classique. Il reçoit les deux bits d'adresse RS, CS transmis par le calculateur hôte 6 par l'intermédiaire du bus d'adresses 21 et les deux bits de commande SRD, SWR transmis par le calculateur hôte 6 par l'intermédiaire du bus de commande 22. Les bits de commande SRD, SWR servent au calculateur hôte 6 pour commander respectivement une lecture (SRD = 0) ou une écriture (SWR = 0) dans la boîte aux lettres 25. Le bit d'adresse CS sert au calculateur hôte 6 pour sélectionner la boîte aux lettres 25 (CS = 0) parmi les autres interfaces pouvant être raccordées au bus système 7. Le bit d'adresse RS sert au calculateur hôte pour indiquer s'il doit échanger des informations avec le registre d'état 28 (RS = 1) ou avec l'un des registres d'entrée et de sortie 26, 27 (RS = 0). Le circuit de commande 29 comprend également un compteur pour gérer les valeurs des bits RINE, RINF, ROUE et ROUF du registre d'états 28.

La ligne de commande de réinitialisation 23 sert à véhiculer un signal binaire de réinitialisation RESET actif à l'état 0 et inactif à l'état 1. Ce signal de réinitialisation RESET est adressé au processeur 1 par le calculateur hôte 6 pour réinitialiser le processeur 1. En ce qui concerne la boîte aux lettres 25, le début de l'activation du signal de réinitialisation (front descendant de RESET) a pour effet de forcer à la valeur 1 les bits RINE, ROUE du registre d'état 28 (registres d'entrée 26 et de sortie 27 vides), de forcer à la valeur 0 les bits RINF, ROUF du registre d'état 28 (registres d'entrée 26 et de sortie 27 non pleins), et de forcer à la valeur 0 les bits RISH, ROSH du registre d'état 28 (accès du calculateur hôte 6 aux registres d'entrée 26 et de sortie 27).

4

Le bus système peut bien entendu comprendre d'autres lignes (non représentées car non concernées directement par l'invention) pour échanger des signaux entre le calculateur hôte 6 et le processeur 1, par exemple des signaux d'acquittement ou d'interruption.

Deux sources sont possibles pour charger le programme à exécuter par le processeur 1 dans la mémoire de programmes 2 : le calculateur hôte 6 par l'intermédiaire du bus de données externe 20 ou la mémoire morte extérieure 4 par l'intermédiaire du bus de données local 10.

Suivant l'invention, pour sélectionner la source du programme à charger, on teste l'état de la boîte aux lettres 25 après avoir activé et désactivé le signal de réinitialisation RESET, pour déterminer si le calculateur hôte 6 a écrit des données dans le registre d'entrée 26 pendant l'activation du signal de réinitialisation RESET.

Si le programme à exécuter doit être chargé depuis le calculateur hôte 6 (choix appartenant à l'utilisateur du système), l'utilisateur programme le calculateur hôte 6 de façon qu'il effectue les opérations suivantes :

a - activation du signal de réinitialisation (RESET = 0)

b - pendant cette activation du signal RESET, écriture de données dans le registre d'entrée 26 de la boîte aux lettres 25 (CS = 0, RS = 0, SWR = 0, SRD = 1 et présentation de données sur le bus 20) ;

c - après que ces données ont été écrites dans le registre 26, écriture de la valeur 1 dans l'emplacement du registre d'état 28 correspondant au bit RISH (CS = 0, RS = 1, SWR = 0, SRD = 1 et présentation d'une donnée sur le bus 20 avec la valeur 1 pour le bit RISH) ; et

d - désactivation du signal de réinitialisation (RESET = 1).

Si le programme à exécuter doit être chargé depuis la mémoire morte extérieure 4, le calculateur hôte envoie seulement une impulsion de réinitialisation RESET de niveau logique 0 pour réinitialiser le processeur 1 sans écrire de données dans la boîte aux lettres 25.

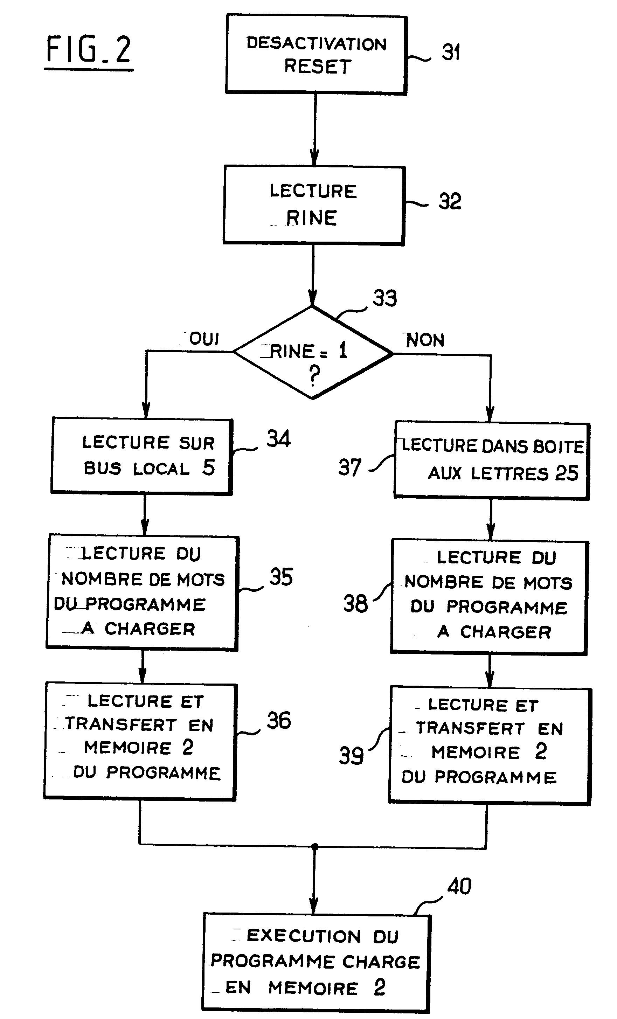

A la fin de l'activation du signal de réinitialisation (front montant de RESET), le processeur 1 exécute une série d'instructions d'amorçage et de chargement (bootstrap) stockées dans une mémoire morte interne (ROM) 30 du processeur 1. Cette série d'instructions est illustrée à la figure 2. Elle comprend un test initial de l'état de la boîte aux lettres 25 pour déterminer si des données ont été écrites dans le registre d'entrée 26 depuis le calculateur hôte 6 pendant l'activation précédente du signal de réinitialisation RESET. Plus précisément, après la désactivation (front montant) du signal RESET (étape 31), le processeur 1 lit le bit RINE du registre d'état 28 de la boîte aux lettres 25 (étape 32), puis détermine si ce bit RINE a pour valeur 1 (étape 33).

Dans l'affirmative, c'est-à-dire si le registre d'entrée 26 est vide car le calculateur hôte 6 n'y a rien écrit pendant l'activation du signal RESET, le programme à charger et à exécuter est lu dans la mémoire morte extérieure 4 par l'intermédiaire du bus de données local 10, comme l'indique le bloc 34 à la figure 2. La lecture du programme à exécuter dans la mémoire morte extérieure 4 et son transfert dans la mémoire de programmes 2 s'effectuent alors de façon classique. Typiquement, les données stockées dans la mémoire morte 4 incluant le programme à exécuter comprennent un en-tête indiquant notamment le format et le nombre de mots du programme à charger. Cet en-tête est d'abord lu (étape 35), puis le programme proprement dit est lu et transféré dans la mémoire de programmes 2 (étape 36).

Si on détermine à l'étape 33 que le bit RINE vaut 0, c'est-à-dire si le registre d'entrée 26 est non vide car le calculateur hôte 6 y a écrit des données pendant l'activation du signal RESET, le programme à charger et à exécuter est lu dans le registre d'entrée 26 de la boîte aux lettres 25 , comme l'indique le bloc 37 à la figure 2. La lecture dans la boîte aux lettres 25 du programme à exécuter provenant du calculateur hôte 6 et son transfert dans la mémoire de programmes 2 s'effectuent alors de façon classique selon le protocole gérant l'accès à la boîte aux lettres 25. Le processeur exécute des étapes 38, 39 fonctionnellement analogues aux étapes de chargement 35, 36 effectuées dans le cas où le programme est lu dans la mémoire morte extérieure 4.

Une fois que le programme a été complètement chargé dans la mémoire 2 (ou partiellement chargé si seules certaines parties du programme sont à exécuter), le processeur 1 quitte la série d'instructions de chargement pour lancer l'exécution du programme chargé (étape 40).

La sélection entre les deux sources possibles du programme à exécuter s'effectue ainsi, selon l'invention, sans requérir de câblage externe entre des broches spéciales du processeur 1.

Dans le cas où le programme à charger est lu dans le registre d'entrée 26 de la boîte aux lettres 25, les données écrites dans le registre d'entrée 26 par le calculateur hôte 6 pendant l'activation du signal de réinitialisation RESET comprennent avantageusement certains éléments servant au chargement du programme dans la mémoire de programme 2, par exemple une partie de l'en-tête ou la totalité de l'en-tête accompagnée des premières instructions du programme proprement dit. Ces éléments pourront alors être considérés directement lors des étapes de chargement 38 et/ou 39. En variante, le calculateur hôte 6 peut écrire des données arbitraires dans le registre 26 lorsque RESET = 0, ces données étant alors ignorées par les instructions de chargement 38, 39.

Ainsi, on a représenté la mémoire de programmes à accès direct 2 comme extérieure au processeur 1, mais elle peut, en variante, être une mémoire RAM interne au processeur 1. De même on a décrit la série d'instructions d'amorçage et de chargement comme stockée dans une mémoire morte interne 30 du processeur 1, mais cette série d'instructions peut également être stockée en grande partie dans une mémoire morte (ROM) externe raccordée sur le bus d'instructions 3, la mémoire interne 30 comportant alors une instruction de branchement à l'adresse appropriée de cette mémoire externe.

En outre, bien que cela ne soit pas la version préférée du procédé, on pourrait envisager d'inverser la logique de l'étape de test 33 en prévoyant le chargement du programme depuis la mémoire morte extérieure si le calculateur hôte a écrit dans le registre d'entrée de la boîte aux lettres pendant l'activation du signal de réinitialisation, et le chargement du programme depuis le calculateur hôte dans le cas contraire.


## Revendications

1. Procédé pour charger un programme dans une mémoire de programmes (2) associée à un processeur (1), le processeur (1) comprenant un bus de données local (10) auquel peut être reliée une mémoire morte extérieure (4) contenant un programme, et une boîte aux lettres (25) pour échanger des données avec un calculateur hôte (6) par l'intermédiaire d'un bus de données externe (20), dans lequel on réinitialise le processeur (1) en activant un signal de réinitialisation (RESET) et, après avoir désactivé le signal de réinitialisation (RESET), on exécute une série d'instructions pour écrire le programme à charger dans la mémoire de programme (2), caractérisé en ce que ladite série d'instructions comprend un test initial de l'état de la boîte aux lettres (25) pour déterminer si des données ont été écrites dans un registre d'entrée (26) de la boîte aux lettres (25) depuis le calculateur hôte (6) pendant l'activation du signal de réinitialisation (RESET), et en ce que, selon le résultat de ce test initial, on lit le programme à charger soit dans le registre d'entrée (26) de la boîte aux lettres (25) soit dans la mémoire morte extérieure (4) par l'intermédiaire du bus de données local (10).

2. Procédé conforme à la revendication 1, caractérisé en ce que le signal de réinitialisation (RESET) est issu du calculateur hôte (6).

3. Procédé conforme à l'une des revendications 1 ou 2, caractérisé en ce que la boîte aux lettres (25) comprend un registre d'état (28) ayant un bit (RINE) dont une première valeur représente un état vide du registre d'entrée (26) et dont une seconde valeur indique un état non vide du registre d'entrée (26), ce bit (RINE) étant forcé à sa première valeur au début de l'activation du signal de réinitialisation (RESET), le test initial de l'état de la boîte aux lettres (25) comprenant une lecture de ce bit (RINE).

4. Procédé conforme à l'une des revendications 1 à 3, caractérisé en ce que, si on détermine au cours du test initial que des données ont été écrites dans le registre d'entrée (26) depuis le calculateur hôte (6) pendant l'activation du signal de réinitialisation (RESET), le programme à charger est lu dans le registre d'entrée (26) de la boîte aux lettres (25) tandis que, dans le cas contraire, le programme à charger est lu dans la mémoire morte extérieure (4) par l'intermédiaire du bus de données local (10).

5. Procédé conforme à la revendication 4, caractérisé en ce que la boîte aux lettres (25) comprend un registre d'état (28) ayant un bit (RISH) dont une première valeur indique que le calculateur hôte (6) a accès au registre d'entrée (26) et dont une seconde valeur indique que le processeur (1) a accès au registre d'entrée (26), ce bit (RISH) étant forcé à sa première valeur au début de l'activation de signal de réinitialisation (RESET), et en ce que lorsque des données ont été écrites dans le registre d'entrée (26) depuis le calculateur hôte (6) pendant l'activation du signal de réinitialisation (RESET), le calculateur hôte (6) fait passer ce bit (RISH) à sa seconde valeur.

6. Procédé conforme à l'une des revendications 4 ou 5, caractérisé en ce que, dans le cas où le programme à charger est lu dans le registre d'entrée (26) de la boîte aux lettres (25), certaines des données écrites dans le registre d'entrée (26) depuis le calculateur hôte (6) pendant l'activation du signal de réinitialisation (RESET) servent au chargement du programme dans la mémoire de programmes (2).

7. Procédé conforme à l'une des revendications 1 à 6, caractérisé en ce que ladite série d'instructions est stockée dans une mémoire morte interne du processeur (1).

**Patentansprüche**

1. Verfahren zum Laden eines Programms in einen mit einem Prozessor (1) verbundenen Programmspeicher (2), wobei der Prozessor (1) einen lokalen Datenbus (10), mit dem ein externer Festspeicher (4) verbunden werden kann, der ein Programm enthält, und einen Briefkasten (25) zum Austausch von Daten mit einem Hauptrechner (6) über einen externen Datenbus (20) aufweist, bei dem man den Prozessor (1) reinitialisiert, indem man ein Reinitialisierungssignal (RESET) aktiviert und man nach Desaktivierung des Reinitialisierungssignals (RESET) eine Befehlsserie durchführt, um das zu ladende Programm in den Programmspeicher (2) zu schreiben, dadurch gekennzeichnet, daß diese Befehlsserie einen Anfangstest zum Zustand des Briefkastens (25) umfaßt, mit dem man feststellt, ob während der Aktivierung des Reinitialisierungssignals (RESET) von dem Hauptrechner (6) aus Daten in ein Eingangsregister (26) des Briefkastens (25) geschrieben wurden, und daß man entsprechend dem Ergebnis dieses Anfangstests das zu ladende Programm entweder in dem Eingangsregister (26) des Briefkastens (25) oder über den lokalen Datenbus (10) in dem externen Festspeicher (4) liest.

2. Verfahren nach Anspruch 1, dadurch gekennzeichnet, daß das Reinitialisierungssignal (RESET) von dem Hauptrechner (6) kommt.

3. Verfahren nach einem der Ansprüche 1 oder 2, dadurch gekennzeichnet, daß der Briefkasten (25) ein Zustandsregister (28) mit einem Bit (RINE) aufweist, von dem ein erster Wert einen leeren Zustand des Eingangsregisters (26) und ein zweiter Wert einen nichtleeren Zustand des Eingangsregisters (26) darstellt, wobei dieses Bit (RINE) zu Beginn der Aktivierung des Reinitialisierungssignals (RESET) zu seinem ersten Wert gezwungen wird und der Anfangstest zum Zustand des Briefkastens (25) ein Lesen dieses Bits (RINE) umfaßt.

4. Verfahren nach einem der Ansprüche 1 bis 3, dadurch gekennzeichnet, daß, wenn man während des Anfangstests feststellt, daß von dem Hauptrechner (6) aus in das Eingangsregister (26) während der Aktivierung des Reinitialisierungssignals (RESET) Daten geschrieben wurden, das zu ladende Progamm in dem Eingangsregister (26) des Briefkastens (25) gelesen wird, während im gegenteiligen Fall das zu ladende Programm über den lokalen Datenbus (10) in dem externen Festspeicher (4) gelesen wird.

5. Verfahren nach Anspruch 4, dadurch gekennzeichnet, daß der Briefkasten (25) ein Zustandsregister (28) mit einem Bit (RISH) umfaßt, von dem ein erster Wert angibt, daß der Hauptrechner (6) Zugriff auf das Eingangsregister (26) hat, und von dem ein zweiter Wert angibt, daß der Prozessor (1) Zugriff auf das Eingangsregister (26) hat, wobei dieses Bit (RISH) zu Beginn der Aktivierung des Reinitialisierungssignals (RESET) zu seinem ersten Wert gezwungen wird, sowie dadurch, daß, wenn Daten während der Aktivierung des Reinitialisierungssignals (RESET) von dem Hauptrechner (6) aus in das Eingangsregister (26) geschrieben wurden, der Hauptrechner (6) bewirkt, daß dieses Bit (RISH) auf seinen zweiten Wert übergeht.

6. Verfahren nach einem der Ansprüche 4 oder 5, dadurch gekennzeichnet, daß in dem Fall, daß das zu ladende Programm in das Eingangsregister (26) des Briefkastens (25) eingelesen wird, bestimmte der von dem Hauptrechner (6) während der Aktivierung des Reinitialisierungssignals (RESET) in das Eingangsregister (26) geschriebenen Daten zum Laden des Programms in den Programmspeicher (2) dienen.

7. Verfahren nach einem der Ansprüche 1 bis 6, dadurch gekennzeichnet, daß die Befehlsserie in einem internen Festspeicher des Prozessors (1) gespeichert ist.

**Claims**

1. Method for loading a program into a program memory (2) associated with a processor (1), the processor (1) comprising a local data bus (10) to which can be connected an external read-only memory (4) containing a program, and a letter-box (25) for exchanging data with a host computer (6) by means of an external data bus (20), in which the processor (1) is reinitialised by activating a reinitialisation signal (RESET) and, after deactivating the reinitialisation signal (RESET), a series of instructions is executed for writing the program to be loaded into the program memory (2), characterised in that the said series of instructions comprises an initial test of the status of the letter-box (25) in order to determine whether the data have been written into an input register (26) of the letter-box (25) from the host computer (6) during the activation of the reinitialisation signal (RESET), and in that, according to the result of this initial test, the program to be loaded is read either in the input register (26) of the letter-box (25) or in the external read-only memory (4) by means of the local data bus (10).

2. Method according to Claim 1, characterised in that the reinitialisation signal (RESET) originated from the host computer (6).

3. Method according to one of Claims 1 or 2, characterised in that the letter-box (25) comprises a status register (28) having a bit (RINE), a first value of which represents an empty status of the input register (26) and a second value of which indicates a non-empty status of the input register (26), this bit (RINE) being forced to its first value at the start of the activation of the reinitialisation signal (RESET), the initial test of the status of the letter-box (25) comprising a reading of this bit (RINE).

4. Method according to one of Claims 1 to 3, characterised in that, if it is determined, in the course of the initial test, that data have been written in the input register (26) from the host computer (6) during the activation of the reinitialisation signal (RESET), the program to be loaded is read in the input register (26) of the letter-box (25) whilst, in the contrary case, the program to be loaded is read in the external read-only memory (4) by means of the local data bus (10).

5. Method according to Claim 4, characterised in that the letter-box (25) comprises a status register (28) having a bit (RISH), a first value of which indicates that the host computer (6) has access to the input register (26) and a second value of which indicates that the processor (1) has access to the input register (26), this bit (RISH) being forced to its first value at the start of the activation of the reinitialisation signal (RESET), and in that, when data have been written in the input register (26) from the host computer (6) during the activation of the reinitialisation signal (RESET), the host computer (6) causes this bit (RISH) to go to its second value.

6. Method according to one of Claims 4 or 5, characterised in that, in the case where the program to be loaded is read in the input register (26) of the letter-box (25), some of the data written in the input register (26) from the host computer (6) during the activation of the reinitialisation signal (RESET) are used for the loading of the program into the program memory (2).

7. Method according to one of Claims 1 to 6, characterised in that the said series of instructions is stored in an internal read-only memory of the processor (1).

FIG.1

EP 0 575 228 B1

FIG. 2

DESACTIVATION
RESET — 31

LECTURE
RINE — 32

33
OUI ← RINE = 1 ? → NON

LECTURE SUR
BUS LOCAL 5 — 34

LECTURE DU
NOMBRE DE MOTS — 35
DU PROGRAMME
A CHARGER

LECTURE ET
TRANSFERT EN — 36
MEMOIRE 2
DU PROGRAMME

LECTURE DANS BOITE
AUX LETTRES 25
37 —

LECTURE DU
NOMBRE DE MOTS
38 — DU PROGRAMME
A CHARGER

LECTURE ET
TRANSFERT EN
39 — MEMOIRE 2
DU PROGRAMME

40
EXECUTION DU
PROGRAMME CHARGE
EN MEMOIRE 2